# EUROPEAN PATENT SPECIFICATION

(11) **EP 0 459 234 B1**
(45) Date of publication and mention of the grant of the patent: **02.08.1995**
(21) Application number: 91107906.9
(22) Date of filing: 16.05.1991
(51) Int. Cl.: F16H 15/52, F16H 37/08

(54) **A disk-type epicycloidal variator incorporating an epicycloidal combiner**
Epizykloidaler Scheibenvariator mit Planetenkoppelgetriebe
Variateur épicycloidal à disques incorporant un combinateur épicycloidal

(30) Priority: 01.06.1990 IT 4161890
(43) Date of publication of application: 04.12.1991
(73) Proprietor: Casarotto, Giorgio, I-45021 Badia Polesine (Rovigo) (IT)
(72) Inventor: Spaggiari, Luciano, I-41043 Formigine (Modena) (IT)
(74) Representative: Cantaluppi, Stefano

(56) References cited:
- EP-A- 0 311 734
- US-A- 3 490 313
- US-A- 3 990 328
- PATENT ABSTRACTS OF JAPAN vol. 6, no. 210 (M-166)(1088) 22 October 1982,& JP-A-57 116962 (TSUBAKIMOTO CHAIN K.K.) 21 July 1982

## Description

This invention relates to an infinitely variable speed drive mechanism as defined in the preamble of claim 1.

An mechanism of the above-mentioned type is described, for example, in US-A 3 990 328. In that known approach, the carrier of the epicycloidal combiner wheelwork (also referred to as combiner epicyclic gear train) is keyed to the carrier of the epicycloidal variator whereon the stub shafts for the discs are supported in a radially movable manner. In addition, the carrier of the epicycloidal combiner wheelwork has a hub journaled in the variator casing with the interposition of rolling bearings.

Such an epicycloidal variator type may be quite cumbersome in the axial direction and has a large number of components, which affects adversely the product overall size and end cost.

It is the object of this invention to provide a speed drive mechanism as specified in the preamble of the specification, which is simple, economical to manufacture and further develops the known mechanism.

According to the invention, this object is achieved by the features as defined in claim 1.

By virtue of the reduced axial dimensions of the mechanism brought about by the use of a single carrier for both the variator and the combiner gear train, the use of intermediate bearings which make the variator casing more complicated and cumbersome can be eliminated.

The combiner epicyclic gear train has a sun gear and an annular gear which are preferably arranged to perform self-centering movements; respectively on an intermediate supporting shaft of the carrier and the output shaft of the drive mechanism.

On account of such features, the sun and annular gears of the combiner epicyclic gear train will "float" to provide optimum distribution of the loads and automatic adjustment for any dissymmetries where the machining of the drive mechanism components is done to standard accuracy levels.

Further advantages of the features of the drive mechanism according to the invention will be apparent from the following detailed description, given herein by way of example only with reference to the accompanying drawings, wherein:
Figure 1 is a longitudinal section view through a drive mechanism according to this invention,
Figure 2 is an enlarged scale detail view of Figure 1,
Figure 3 is a view similar to Figure 2; showing a second embodiment of the invention, and
Figure 4 is a view similar to Figures 2-3, showing a third embodiment of the invention.

With reference to the drawings, generally shown at 10 is an infinitely variable disc-type speed drive mechanism comprising a case 12 having an epicycloidal disc-type variator 14 and a combiner epicyclic gear train 16 mounted on its interior. The variator 14 has, in a manner known per se, a pair of flanges or sun discs 18a and 18b, respectively, which are held clamped together by diaphragm springs 20 and are keyed to an input shaft 22. Partly clamped between the flanges 18, which function as a sun gear in the variator, are a plurality of planet discs 24 acting as planet gears and being provided with supporting stub shafts 24a which are journaled in bushes 26 slidable radially within radial cutouts 28 of a single disc-shaped element 30 defining the carrier of the epicycloidal variator 14.

The discs 24 of the epicycloidal variator 14 roll along a pair of outer planetary annular tracks 34a and 34b, respectively, the axial spacing thereof can be adjusted by means of a cam adjustment arrangement C of a kind known per se. By changing the width of the gap defined between the outer planetary tracks, the pivot axes of the discs 24, designated X-X in the Figure, can be moved toward and away from the axis of the drive mechanism 10, designated Y-Y in the drawings, thereby enabling the variation of the drive ratio between the rotational speed of the input shaft 22 to the rotational speed of the carrier 30.

The latter is journaled, with the interposition of rolling bearings 36, on one end 38a of a coupling or intermediate shaft 38 keyed to the first clamping flange 18a of the discs 24.

The combiner epicyclic gear train 16 has a sun gear 40 fitted into a recessed face seat 42 of the coupling 38 which is formed with an internal toothing effective to enable keying of the coupling 38 and the sun gear 40 with a selected clearance. The combiner gear train 16 has, moreover, a plurality of planet gears 44 journaled on stub shafts 44a affixed to the carrier 30, and an annular gear (named also ring gear) 46 having a coupling flange 46a provided with a splined bore 47 keyed to a toothed end portion 48a of an output shaft 48 of the drive mechanism 10.

The fit between the sun gear 40 and the coupling 38, and the fit between the output shaft 48 and the annular gear 46, are such as to accommodate angular and radial self-centering movements of the sun gear 40 on the coupling 38 and the annular gear 46 on the output shaft 48, respectively. In other words, said toothed joints are selected to allow the sun gear 40 and annular gear 46 to "float" such that any dissymmetries in the gears can be adjusted for and an optimum distribution of the loads achieved without requiring high-precision machining during the manufacture of the gears of the combiner gear train.

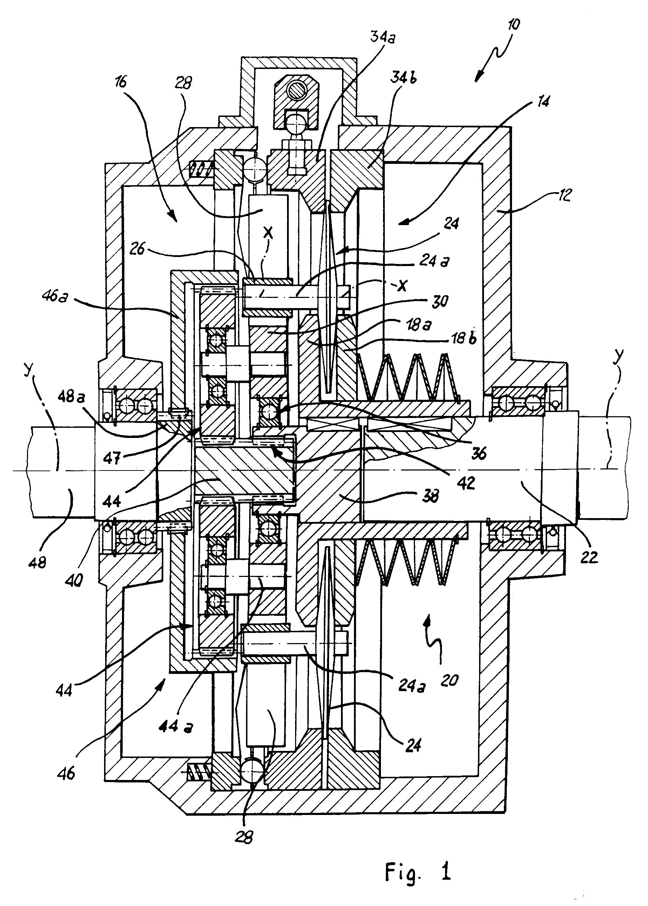

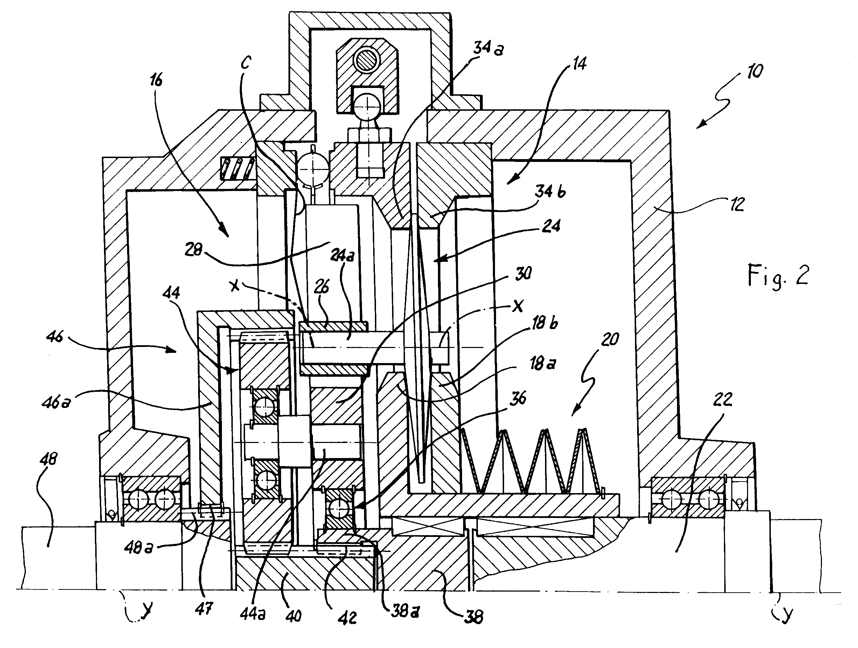

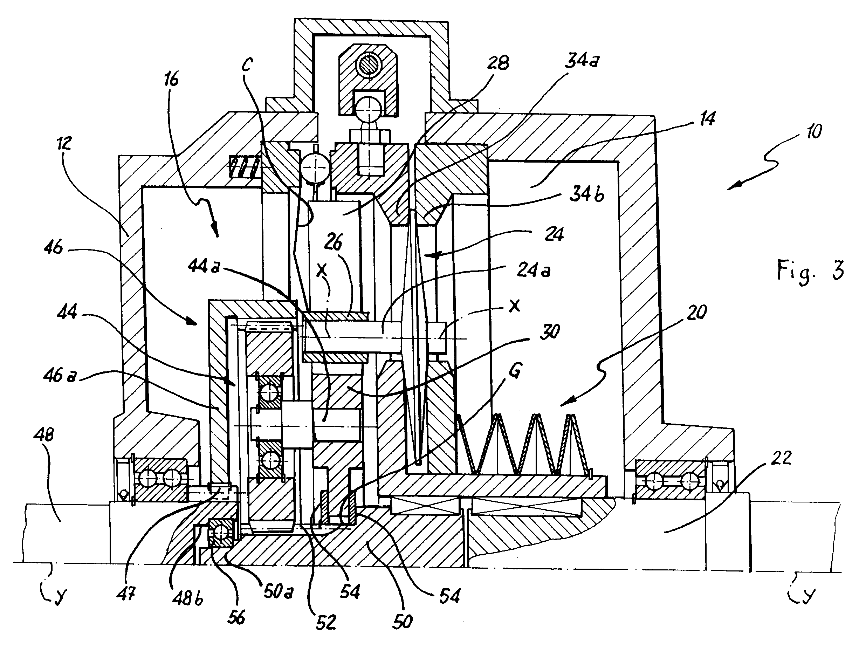

Shown in detail in Figure 3 is a second embodiment of the invention wherein similar elements have been denoted by the same reference numerals. This embodiment differs from the previous one by the "floating" fit of the carrier 30 on a central pinion gear 52 on an intermediate shaft 50 (the equivalent of the combined coupling 38 and sun gear 40 of the previous example) having, adjacent to one end 50a thereof, an outside toothing 52 defining the sun gear of the combiner epicyclic gear train 16. The radial self-centering movements of the carrier 30 are allowed by a radial clearance G being provided between the intermediate shaft 50 and the carrier, and by virtue of guide rings 54 being affixed axially to the intermediate shaft 50. The latter is supported rotatably, with one end 50a remote from the input shaft 22, in a hollow face seat 48b on the output shaft 48, with the interposition of a rolling bearing 56. The annular gear 46 is mounted similar to the one described herein above and shown in Figures 1-2. In this second embodiment, the carrier 30 and annular gear 46 of the combiner gear train 16 are both mounted "floating", whereas the sun gear 52 undergoes no self-centering movements, it being guided both by the input shaft 22 and the output shaft 48 rotatable about the center axis Y-Y.

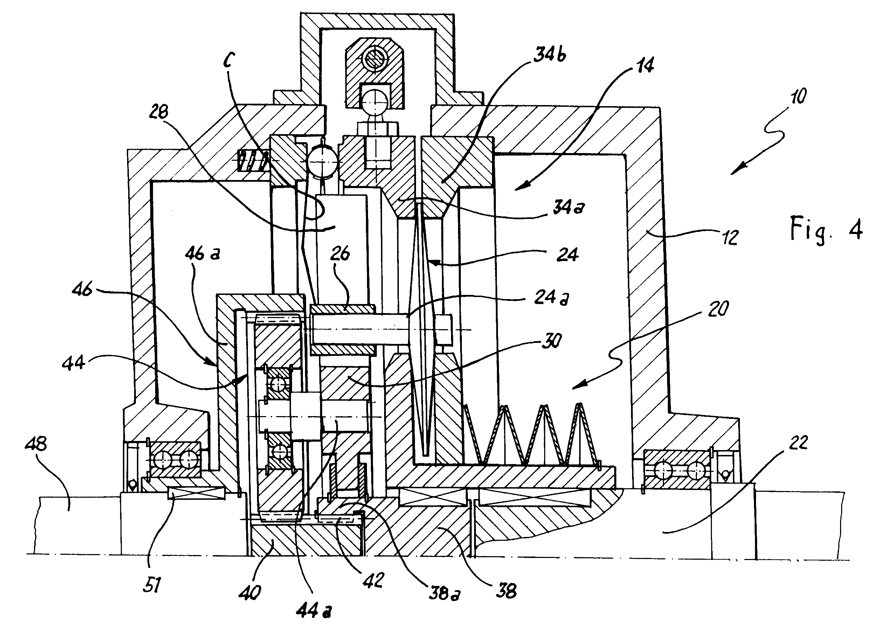

In the third embodiment of the invention, shown in Figure 4, the carrier 30 is mounted "floating" in the same way as described and illustrated in connection with the second embodiment, and the sun gear 40 of the combiner gear train is also a floating mount as described and illustrated in connection with the first embodiment. In such an approach, the annular gear 46 is keyed, as by means of a key 51, directly to the output shaft 48 of the drive mechanism 10. In this case, therefore, the element of the combiner gear train 16 not to undergo self-centering movements is the annular gear 46.

Understandably, where the gears in the combiner gear train are machined with special accuracy, mounts may be adopted which allow of no radial or angular self-centering movements. Likewise, it is contemplated that all the components of the combiner gear train may be mounted "floating".

## Claims

1. An infinitely variable speed drive mechanism comprising:
**a)** a disc-type epicycloidal variator (14) comprising a pair of sun discs (18a,18b) mounted on an input shaft (22) of said speed drive mechanism for rotation therewith, one of said sun discs (18b) being capable of limited axial movement along said input shaft and being loaded towards the other sun disc (18a); a plurality of planet discs (24) each mounted on a supporting stub shaft (24a) for rotation therewith; a carrier means (30) carrying said supporting stub shafts of said planet discs; and a pair of spaced non rotating outer planetary annular tracks (34a,34b) substantially coplanar with and concentric with said pair of sun discs, the sun discs and annular tracks embracing and frictionally engaging said planet discs,
**b)** a combiner epicyclic gear train (16) comprising a sun gear (40; 52) drivingly connected to said input shaft of said speed drive mechanism, an annular gear (46) drivingly connected to an output shaft (48) of said speed drive mechanism, and a plurality of planet gears (44) journaled on stub shafts (44a) mounted on said carrier means, said planet gears of said combiner epicyclic gear train and said planet discs of said disc-type epicycloidal variator are supported on axially opposite sides of said carrier means,
**c)** said disc-type epicycloidal variator including means to change the width defined between said pair of outer planetary annular tracks thereby enabling the infinitely variation of the drive ratio, characterized in that
**d)** said carrier means is composed of a single disc-shaped carrier (30); and
**e)** said disc-shaped carrier has radial seats (28) mounting, radially slidable therein, said supporting stub shafts (26, 24a) of said planet discs (24) of said epicycloidal variator and carries said stub shafts (44a) of said planet gears (44) of said combiner epicyclic gear train.

2. A drive mechanism according to Claim 1, wherein said sun gear (40) and said annular gear (46) are arranged such to perform self-centering movements on an intermediate shaft (38) supporting said carrier (30) and said output shaft (48) respectively.

3. A drive mechanism according to Claim 2, wherein said sun gear (40) comprises an end portion face keyed with a predetermined radial/angular clearance to said intermediate shaft (38) which is connected to said input shaft (22) to rotate therewith.

4. A drive mechanism according to Claim 1, wherein said carrier (30) is arranged such to perform self-centering movements on an intermediate shaft (50) coaxial and integral with said sun gear (52), and that said annular gear (46) is arranged such to perform self-centering movements on said output shaft (48).

5. A drive mechanism according to Claim 4, wherein said intermediate shaft (50) has a first end keyed to said input shaft (22) and a second end (50a) journaled on one end (48b) of said output shaft (48).

6. A drive mechanism according to Claim 1, wherein said carrier (30) is arranged such to perform self-centering movements on an intermediate shaft (38) coaxial with said sun gear (40) which comprises an end portion face keyed with a predetermined radial/angular clearance to said intermediate shaft (38) which is connected to said input shaft (22) to rotate therewith.

7. A drive mechanism according to either Claim 3 or 6, wherein the keyed fit of said sun gear (40) to said intermediate shaft (38) is provided in a face recess (42) of the latter formed with an internal toothing loosely engaged with an external toothing on said sun gear (40).

## Patentansprüche

1. Stufenlos veränderbares Getriebe, das aufweist:
a) einen Umlauf-Scheibenvariator (14) mit einem Paar von Sonnenscheiben (18a, 18b), die drehfest auf einer Eingangswelle (22) des Getriebes montiert sind, wobei eine (18b) dieser Sonnenscheiben eine begrenzte axiale Bewegung entlang der Eingangswelle (22) ausführen kann und gegen die andere Sonnenscheibe (18a) vorgespannt ist,
einer Mehrzahl von Planetenscheiben (24), die jeweils drehfest auf einer tragenden Stummelwelle (24a) montiert sind,
einer Trägervorrichtung (30), die die tragenden Stummelwellen (24a) der Planetenscheiben (24) trägt,
und einem Paar von im Abstand angeordneten nichtdrehenden ringförmigen Planetenführungsbahnen (34a, 34b), die im wesentlichen koplanar und konzentrisch zu dem Paar von Sonnenscheiben (18a, 18b) angeordnet sind, wobei die Sonnenscheiben und die ringförmigen Führungsbahnen die Planetenscheiben reibschlüssig umgreifen,
b) einen Planeten-Koppelgetriebezug (16) mit
einem Sonnenzahnrad (40; 52), das mit der Eingangswelle (22) des Getriebes in Antriebsverbindung steht,
einem Ringzahnrad (46), das mit einer Ausgangswelle (48) des Getriebes in Antriebsverbindung steht,
und einer Mehrzahl von Planetenzahnrädern (44), die auf Stummelwellen (44a) drehbar gelagert sind, die an der Trägervorrichtung montiert sind, wobei die Planetenzahnräder des Planeten-Koppelgetriebezugs und die Planetenscheiben des Umlauf-Scheibenvariators auf axial entgegengesetzten Seiten der Trägervorrichtung angeordnet sind,
c) wobei der Umlauf-Scheibenvariator Mittel zur Änderung des Abstands zwischen dem Paar von äußeren Planetenführungsbahnen und damit zur stufenlosen Änderung des Übersetzungsverhältnisses des Getriebes aufweist,
**dadurch gekennzeichnet,** daß
d) die Trägervorrichtung aus einem einzigen scheibenförmigen Träger (30) besteht und
e) dieser scheibenförmige Träger (30)
radiale Sitze (28) aufweist, in denen die tragenden Stummelwellen (26, 24a) der Planetenscheiben (24) des Umlauf-Scheibenvariators in radialer Richtung gleitbar montiert sind,
und die Stummelwellen (44a) der Planetenzahnräder (44) des Planeten-Koppelgetriebezugs trägt.

2. Getriebe nach Anspruch 1, bei dem das Sonnenzahnrad (40) und das Ringzahnrad (46) so angeordnet sind, daß sie selbstzentrierende Bewegungen auf einer Zwischenwelle (38) ausführen, auf der der Träger (30) bzw. die Ausgangswelle (48) gelagert sind.

3. Getriebe nach Anspruch 2, bei dem das Sonnenzahnrad (40) eine Stirnfläche besitzt, die mit einem vorbestimmten Radial-/Winkelabstand mit der Zwischenwelle (38) verkeilt ist, die drehfest mit der Eingangswelle (22) verbunden ist.

4. Getriebe nach Anspruch 1, bei dem der Träger (30) so angeordnet ist, daß er selbstzentrierende Bewegungen auf einer Zwischenwelle (50) ausführt, die koaxial zu dem Sonnenzahnrad (52) angeordnet und einstückig mit diesem ausgebildet ist, und daß das Ringzahnrad (46) so angeordnet ist, daß es selbstzentrierende Bewegungen auf einer Ausgangswelle (48) ausführt.

5. Getriebe nach Anspruch 4, bei dem die Zwischenwelle (50) mit einem ersten Ende auf der Eingangswelle (22) festgekeilt und mit seinem zweiten Ende auf einem Ende (48b) der Ausgangswelle (48) drehbar gelagert ist.

6. Getriebe nach Anspruch 1, bei dem der Träger (30) so angeordnet daß er selbstzentrierende Bewegungen auf einer Zwischenwelle (38) ausführt, die koaxial zu dem Sonnenzahnrad (40) angeordnet ist, wobei dieses eine Stirnfläche besitzt, die mit einem vorbestimmten Radial-/Winkelabstand mit der Zwischenwelle (38) verkeilt ist, die drehfest mit der Eingangswelle (22) verbunden ist.

7. Getriebe nach einem der Ansprüche 3 oder 6, bei dem die Keilpassung des Sonnenzahnrads (40) an der Zwischenwelle (38) in einer Vertiefung der letzteren vorgesehen ist, in der eine Innenverzahnung ausgebildet ist, die mit einer Außenverzahnung des Sonnenzahnrads (49) in losem Eingriff steht.

## Revendications

1. Mécanisme de transmission à vitesse variable de façon continue, comprenant :
a) un variateur épicycloïdal (14) du type à disque comprenant deux disques solaires (18a, 18b) montés sur un arbre d'entrée (22) du mécanisme de transmission afin qu'ils tournent avec lui, l'un des disques solaires (18b) pouvant présenter un mouvement axial limité le long de l'arbre d'entrée et étant rappelé vers l'autre disque solaire (18a), plusieurs disques satellites (24) montés chacun sur un arbre rectiligne de support (24a) afin qu'ils tournent avec lui, un dispositif à porte-satellites (30) portant les arbres rectilignes de support des disques satellites, et une paire de voies annulaires satellites externes non rotatives distantes (34a, 34b) pratiquement coplanaires à la paire de disques solaires et concentriques à ceux-ci, les pistes solaires et les voies annulaires entourant les disques satellites et coopérant par frottement avec eux, et
b) un train épicycloïdal (16) formant combinateur comprenant un pignon solaire (40 ; 52) raccordé à l'arbre d'entrée du mécanisme de transmission afin qu'ils s'entraînent, un pignon annulaire (46) raccordé à un arbre de sortie (48) du mécanisme de transmission afin qu'ils s'entraînent, et plusieurs pignons satellites (44) tourillonnant sur des arbres rectilignes (44a) montés sur le porte-satellites, les pignons satellites du train épicycloïdal du combinateur et les disques satellites du variateur épicycloïdal à disques étant supportés sur les côtés axialement opposés du porte-satellites,
c) le variateur épicycloïdal du type à disque comprenant un dispositif destiné à changer la largeur délimitée entre les deux voies annulaires satellites externes de manière que le rapport de transmission puisse varier de façon continue, caractérisé en ce que
d) le porte-satellites est composé d'un seul portesatellites en forme de disque (30), et
e) le porte-satellites en forme de disque possède des sièges radiaux (28) de montage des arbres rectilignes de support (26, 24a) des disques satellites (24) du variateur épicycloïdal de manière qu'ils puissent coulisser radialement, et porte les arbres rectilignes (44a) des pignons satellites (44) du train épicycloïdal du combinateur.

2. Mécanisme de transmission selon la revendication 1, dans lequel le pignon solaire (40) et le pignon annulaire (46) sont disposés afin qu'ils effectuent des mouvements de centrage automatique sur un arbre intermédiaire (38) supportant le porte-satellites (30) et l'arbre de sortie (48) respectivement.

3. Mécanisme de transmission selon la revendication 2, dans lequel le pignon solaire (40) est une partie d'extrémité clavetée par sa face avec un espace radial et angulaire prédéterminé sur l'arbre intermédiaire (38) qui est raccordé à l'arbre d'entrée (22) afin qu'il tourne avec lui.

4. Mécanisme de transmission selon la revendication 1, dans lequel le porte-satellites (30) est disposé afin qu'il effectue des mouvements de centrage automatique sur un arbre intermédiaire (50) coaxial au pignon solaire (52) et solidaire de celui-ci, et le pignon annulaire (46) est disposé afin qu'il effectue des mouvements de centrage automatique sur l'arbre de sortie (48).

5. Mécanisme de transmission selon la revendication 4, dans lequel l'arbre intermédiaire (50) a une première extrémité clavetée sur l'arbre d'entrée (22) et une seconde extrémité (50a) tourillonnant sur une première extrémité (48b) de l'arbre de sortie (48).

6. Mécanisme de transmission selon la revendication 1, dans lequel le porte-satellites (30) est disposé afin qu'il effectue des mouvements de centrage automatique sur un arbre intermédiaire (38) coaxial au pignon solaire (40) qui comporte une partie d'extrémité clavetée par sa face avec un espace radial-angulaire prédéterminé sur l'arbre intermédiaire (38) qui est raccordé à l'arbre d'entrée (22) afin qu'il tourne avec lui.

7. Mécanisme de transmission selon la revendication 3 ou 6, dans lequel l'ajustement par clavetage du pignon solaire (40) et de l'arbre intermédiaire (38) est réalisé dans une cavité (42) de la face de ce dernier arbre formé avec une denture interne coopérant avec du jeu avec une denture externe du pignon solaire (40).
